(19) Europäisches Patentamt
European Patent Office
Office européen des brevets

(11) **EP 4 718 517 A1**

(12) **EUROPEAN PATENT APPLICATION**

(43) Date of publication:
01.04.2026 Bulletin 2026/14

(51) International Patent Classification (IPC):
*H01M 4/133* (2010.01)

(21) Application number: 25201356.0

(22) Date of filing: 10.09.2025

(52) Cooperative Patent Classification (CPC):
H01M 4/133; H01M 2004/027

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 27.09.2024 JP 2024169492

(71) Applicant: Prime Planet Energy & Solutions, Inc.
Chuo-ku, Tokyo 103-0022 (JP)

(72) Inventor: KANG, Surim
Tokyo, 103-0022 (JP)

(74) Representative: Kuhnen & Wacker
Patent- und Rechtsanwaltsbüro PartG mbB
Prinz-Ludwig-Straße 40A
85354 Freising (DE)

(54) **NEGATIVE ELECTRODE OF SECONDARY BATTERY, MANUFACTURING METHOD OF NEGATIVE ELECTRODE, AND SECONDARY BATTERY WITH NEGATIVE ELECTRODE**

(57) Provided is a technique to suppress a reduction in a capacity maintenance rate. In the negative electrode disclosed herein, a negative electrode active material layer contains first Si-containing particles and second Si-containing particles. When an expansion rate S2 of the second Si-containing particles is treated as 1, an expansion rate S1 of the first Si-containing particles is more than 0.3 and not more than 0.9. The first Si-containing particles and the second Si-containing particles include LiF coating layers. A second peak intensity ratio of the second Si-containing particles is larger than the first peak intensity ratio of the first Si-containing particles.

FIG.2

EP 4 718 517 A1

**Description**

BACKGROUND OF THE DISCLOSURE

1. Technical Field

A present disclosure relates to a negative electrode of a secondary battery, and a manufacturing method of the negative electrode. The present disclosure also relates to the secondary battery in which this negative electrode is used.

2. Background

Recently, a secondary battery is suitably used for a portable power supply, such as personal computer and portable terminal, a power supply for driving automobiles, such as battery electric vehicle (BEV), hybrid electric vehicle (HEV), and plug-in hybrid electric vehicle (PHEV), or the like.

Regarding a purpose of the power supply for driving automobiles, especially regarding a purpose of the power supply for driving the BEV, from a perspective of extending a driving distance of the vehicle, it is desired to make the secondary battery have a higher capacity. As a negative electrode active material whose capacity is high, it is known to use a Si-containing particle, and it is known, with the Si-containing particle, to be able to make the secondary battery have the higher capacity.

Japanese Patent Application Publication 2019-522886 discloses the negative electrode active material for an electrochemical element. This negative electrode active material contains a carbon material, silicon, and lithium fluoride (LiF). The negative electrode active material is configured with a carbon phase consisting of the carbon material and with a Si-LiF mix particle. The Si-LiF mix particle is distributed uniformly or ununiformly in the carbon phase. The document describes that, by using the negative electrode active material including the configuration described above, an initial efficiency can be enhanced, it is possible by suppressing a volume expansion to reduce an irreversible phenomenon, and it is further possible to implement enhancing a conductivity and uniformly dispersing an active material particle in an electrode. Then, it is described that, in the battery including the negative electrode having the configuration described above, a life property of the battery is improved.

SUMMARY

However, the Si-containing particles have a property that an expansion and contraction at an electrical charge and discharge time is large. The secondary battery in which the Si-containing particles are used has a problem that, when the electrical charge and discharge is repeated, the negative electrode is repeatedly expanded and contracted so as to reduce a cycle performance. Therefore, it is demanded to develop the negative electrode in which the reduction of the capacity maintenance rate is suppressed when the electrical charge and discharge is repeated.

In view of the above described circumstance, the present disclosure has an object of suppressing the reduction in the capacity maintenance rate of the negative electrode containing the Si-containing particles when the electrical charge and discharge is repeated.

A negative electrode of a secondary battery of the present disclosure includes a negative electrode current collector, and a negative electrode active material layer. The negative electrode active material layer is supported by the negative electrode current collector. The negative electrode active material layer contains first Si-containing particles and second Si-containing particles, as a negative electrode active material. When an expansion rate $S2$ of the second Si-containing particles after an electrical charge A with respect to one before the electrical charge A is treated as 1, an expansion rate $S1$ of the first Si-containing particles after the electrical charge A with respect to one before the electrical charge A is more than 0.3 and not more than 0.9. The electrical charge A is an electrical charge in which, after a constant current electrical charge is performed under 25°C environment by a current value being 0.01 C till 4.2 V is performed, a constant voltage electrical charge is performed till the current value reaches 0.005 C. The first Si-containing particles include a LiF coating layer. The second Si-containing particles include the LiF coating layer. On a XPS spectrum of the first Si-containing particles measured with a XPS, a ratio of a peak intensity of a F of a LiF with respect to the peak intensity of the F of one being other than the LiF is treated as a first peak intensity ratio. On the XPS spectrum of the second Si-containing particles, the ratio of the peak intensity of the F of the LiF with respect to the peak intensity of the F of one being other than the LiF is treated as a second peak intensity ratio. At that time, the second peak intensity ratio is larger than the first peak intensity ratio. In accordance with such a configuration, regarding the negative electrode containing the Si-containing particles, it is possible to suppress a reduction in a capacity maintenance rate when the electrical charge and the electrical discharge are repeated.

From another aspect, a manufacturing method of the negative electrode of the secondary battery of the present disclosure includes a step for preparing the first Si-containing particles and the second Si-containing particles, as a negative electrode active material; a step for mixing the first Si-containing particles and the second Si-containing particles in a dispersion medium and for preparing a negative electrode paste; a step for applying the negative electrode paste to coat the negative electrode current collector; and a step for drying the coating negative electrode paste. When the expansion rate S2 of the second Si-containing particles after the electrical charge A with respect to one before the electrical charge A is treated as 1, the expansion rate S1 of the first Si-containing particles after the electrical charge A with respect to one before the electrical charge A is more than 0.3 and not more than 0.9. The electrical charge A is the electrical charge in which, after the constant current electrical charge is performed under 25°C environment by the current value being 0.01 C till 4.2 V, the constant voltage electrical charge is performed till the current value reaches 0.005 C. The first Si-containing particles include the LiF coating layer. The second Si-containing particles include the LiF coating layer. On the XPS spectrum of first Si-containing particles measured with the XPS, the ratio of the peak intensity of the F of the LiF with respect to the peak intensity of the F of one being other than the LiF is treated as the first peak intensity ratio. On the XPS spectrum of second Si-containing particles, the ratio of the peak intensity of the F of the LiF with respect to the peak intensity of the F of one being other than the LiF is treated as the second peak intensity ratio. At that time, the second peak intensity ratio is larger than the first peak intensity ratio. In accordance with such a configuration, even regarding the negative electrode containing the Si-containing particles, it is possible to provide the negative electrode in which it is possible to suppress the reduction of the capacity maintenance rate when the electrical charge and the electrical discharge are repeated.

From another aspect, the secondary battery of the present disclosure includes a positive electrode, a negative electrode, and an electrolyte. The negative electrode is the above described negative electrode. According to the configuration described above, regarding the negative electrode containing the Si-containing particles, it is possible to suppress the reduction in the capacity maintenance rate when the electrical charge and the electrical discharge are repeated.

BRIEF DESCRIPTION OF THE DRAWINGS

FIG. 1 is a cross section view that schematically shows a configuration of a negative electrode of a secondary battery in accordance with one embodiment of the present disclosure.
FIG. 2 is a cross section view that schematically shows a configuration of particles contained in a negative electrode active material layer of the negative electrode shown by FIG. 1.
FIG. 3 is a cross section view that schematically shows a configuration of a lithium ion secondary battery constructed with the negative electrode of the secondary battery in accordance with one embodiment of the present disclosure.
FIG. 4 is a schematic exploded view that shows a configuration of a wound electrode assembly of the lithium ion secondary battery shown by FIG. 3.

DESCRIPTION OF THE EMBODIMENTS

Below, while referring to drawings, an embodiment in accordance with the present disclosure would be explained. Incidentally, a matter not described in the present description but required for performing the present disclosure can be grasped as design matters of those skilled in the art based on the related art in the present field. The present disclosure can be executed based on the contents disclosed in the present description, and the technical common sense in the present field. In the following drawings, the same numerals and signs are given to the members/parts providing the same effect. In each drawing, the dimensional relation (a length, a width, a thickness, or the like) does not reflect the actual dimensional relation. Incidentally, a numerical value range represented as "A to B" in the present description can contain A and B.

Incidentally, the term "secondary battery" in the present description represents an electricity storage device being capable of repeatedly charging and discharging. The term "lithium ion secondary battery" in the present description represents a secondary battery that uses a lithium ion as a charge carrier and implements an electrical charge and discharge by movement of the lithium ion between a positive electrode and the negative electrode.

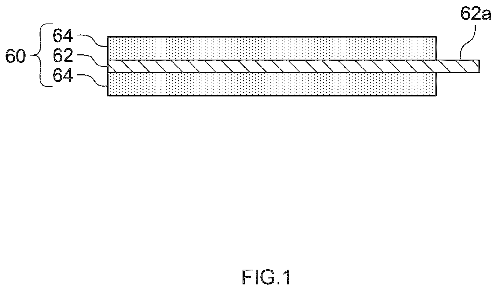

The herein disclosed negative electrode is used for the secondary battery, or suitably used for the lithium ion secondary battery. One embodiment of the herein disclosed negative electrode would be explained, while referring to FIG. 1. FIG. 1 is a cross section view that schematically shows an example of a negative electrode 60 in accordance with the present embodiment, and is a cross section view that is shown along a thickness direction and a width direction. The negative electrode 60 in accordance with the present embodiment shown by FIG. 1 is the negative electrode of the lithium ion secondary battery.

As shown in the drawing, the negative electrode 60 includes a negative electrode current collector 62 and a negative electrode active material layer 64 that is supported by the negative electrode current collector 62. In other words, the negative electrode 60 includes the negative electrode current collector 62 and the negative electrode active material layer 64 that is provided on the negative electrode current collector 62. The negative electrode active material layer 64 might be provided on only one surface of the negative electrode current collector 62 or might be provided on both surfaces of the negative electrode current collector 62 as shown by the illustrated example. It is preferable that the negative electrode active material layer 64 is provided on both surfaces of the negative electrode current collector 62.

As shown in the illustrated example, a negative electrode active material layer non-formation part 62a in which the negative electrode active material layer 64 is not provided might be provided at one of end parts in the width direction of the negative electrode 60. On the negative electrode active material layer non-formation part 62a, the negative electrode current collector 62 is exposed and thus the negative electrode active material layer non-formation part 62a can function as an electrical collector part. However, a configuration for electrically collecting from the negative electrode 60 is not restricted by this.

A shape of the negative electrode current collector 62 is a foil shape (or a sheet shape) in the illustrated example, but it is not restricted by this. The negative electrode current collector 62 might be formed in a rod shape, a plate shape, a mesh shape, or the like. As a material of the negative electrode current collector 62, similarly to a conventional lithium ion secondary battery, it is possible to use a metal having a good electrically conductive property (for example, copper, nickel, titanium, stainless steel, or the like), and the copper is preferable among them. As the negative electrode current collector 62, it is especially preferable to use a copper foil.

A size of the negative electrode current collector 62 is not particularly restricted, and it is good to be suitably decided in accordance with a battery design. In a situation where the copper foil is used as the negative electrode current collector 62, a thickness of it is not particularly restricted, but it might be, for example, equal to or more than 5 $\mu$m and not more than 35 $\mu$m, or preferably equal to or more than 6 $\mu$m and not more than 20 $\mu$m.

Anyway, conventionally, it is known that, when the secondary battery is subjected to an initial electrical charge, a nonaqueous electrolytic solution is decomposed and then a SEI coating layer is formed on a surface of the negative electrode active material. The present inventor has found about a conventional technique that, when the electrical charge and the electrical discharge are repeated on the secondary battery, the reduction in the capacity maintenance rate of the secondary battery is caused by a below described matter.

Regarding the negative electrode active material containing the Si, for example, a volume change in response to the electrical charge and the electrical discharge of the secondary battery is large. Thus, by an expansion caused at the time when the secondary battery is electrically charged, there is a possibility that the SEI coating layer being present on the surface of the negative electrode active material is damaged. When the SEI coating layer is damaged, the surface of the negative electrode active material is exposed, the nonaqueous electrolytic solution at this exposed part is decomposed, and thus the SEI coating layer is formed. When the electrical charge and the electrical discharge are repeated on the secondary battery, damaging this SEI coating layer and forming the SEI coating layer at this damaged portion (an exposed portion of the negative electrode active material) are repeatedly caused. This could be a contributing factor of reducing the capacity maintenance rate of the secondary battery, when the electrical charge and the electrical discharge are repeated.

Thus, the present inventor had an inspiration of previously providing a LiF coating layer on the surface of the negative electrode active material that contains the Si. The LiF coating layer, for example, can have a function similar to the SEI coating layer, and further can follow the volume change of the negative electrode active material. Thus, the present inventor thought that, by previously providing the LiF coating layer on the surface of the negative electrode active material, it would become not easy to damage the LiF coating layer even when the electrical charge and the electrical discharge were repeated on the secondary battery, and therefore that it would be possible to suppress the surface of the negative electrode active material from being exposed. The present inventor thought that, by this, it would be possible to suppress the SEI coating layer from being formed on this exposed portion of the negative electrode active material and consequently to suppress the reduction in the capacity maintenance rate of the secondary battery.

Further, the present inventor thought that, for example, by making an electrically conductive path on the negative electrode active material layer be maintained in a suitable state even when the negative electrode active material was expanded and contracted at the electrical charge and discharge time of the secondary battery, it would be possible to further suitably suppress the reduction in the capacity maintenance rate of the secondary battery. Then, the present inventor intended to make the negative electrode active material layer contain 2 kinds of negative electrode active materials whose expansion rates at the electrically charging time were different from each other (here, both of which were negative electrode active materials containing the Si). In a situation where the negative electrode active material layer contains said 2 kinds of negative electrode active materials whose expansion rates are different from each other, it is possible to enhance a packing ability of the negative electrode active material layer even when said both are expanded and contracted according to the electrical charge and discharge time of the secondary battery. The present inventor thought, about said 2 kinds of negative electrode active materials whose expansion rates at the electrically charging time were different from each other, that it would be possible to further suitably suppress the reduction in the capacity maintenance rate by forming a suitable amount of LiF coating layer on each surface even when the electrical charge and the electrical discharge were repeatedly performed on the secondary battery.

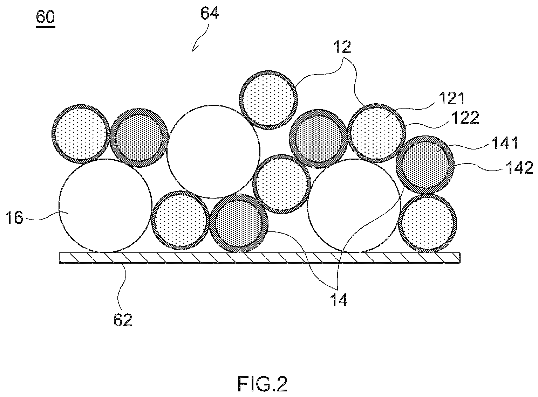

The negative electrode active material layer 64 contains the negative electrode active materials. As the negative electrode active materials, for example, first Si-containing particles and second Si-containing particles are used. About this, it is explained with FIG. 2. FIG. 2 is a schematic cross section view that shows particles contained in the negative electrode active material layer 64 shown by FIG. 1. As shown in FIG. 2, the negative electrode active material layer 64 contains first Si-containing particles 12 and second Si-containing particles 14. Incidentally, FIG. 2 is a schematic view, and thus a number of the particles, a distribution of the particles, or the like, are not restricted to one shown by FIG. 2.

As shown in FIG. 2, the first Si-containing particles 12 include core particles 121 and a coating layer 122. The core particles 121 are, for example, Si-containing particles. The coating layer 122 herein is arranged on at least a part of a surface of the core particles 121. As shown in FIG. 2, the second Si-containing particles 14 include core particles 141 and a coating layer 142. The core particles 141 are, for example, Si-containing particles. The coating layer 142 herein is arranged on at least a part of a surface of the core particles 141. It is enough that the Si-containing particles configuring the core particles 121 and the core particles 141 contain the Si, and they might be, for example, Si particles, Si oxide particles, Si-C composite particles, or the like. It is good that both of the core particles 121 and the core particles 141 are the Si-C composite particles. The Si-C composite particles include, for example, a carbon domain and a Si-containing domain.

The carbon domain is, for example, a carbonide of a carbon precursor (for example, a petroleum pitch, a coal pitch, a phenolic resin, or the like); a graphite; or the like. It is suitable that the carbon domain configures a carbon matrix. It is good that the Si-C composite particles are, for example, particles in which the Si-containing domain is dispersed into the carbon matrix. The Si-C composite particles can include, for example, plural Si-containing domains in the carbon matrix. In this case, the carbon matrix can relieve a volume change caused by an expansion and a contraction of the Si-containing domain, and thus it is advantageous.

The Si-containing domain contains the Si, and is configured with, for example, the Si, a Si oxide ($SiO_x$), a Si nitride ($SiN_x$), a Si carbide ($SiC_x$), or the like. The Si-containing domain is preferably configured with at least any of the Si and the Si oxide ($SiO_x$). The Si-containing domain might be nanoparticles. An oxygen content amount of the Si-containing domain is preferably equal to or less than 10 mass%.

A mean particle diameter of the Si-containing domain is, for example, equal to or less than 50 nm, or might be 5 nm to 50 nm. Incidentally, said "mean particle diameter of the Si-containing domain" can be obtained as described below. At first, the negative electrode active material layer 64 is subjected to a FIB (a focused ion beam) processing, so as to manufacture a specimen for a scan transmission electron microscope (STEM) observation. Then, after this specimen is subjected to an element analysis by EDX elemental mapping, a BF image (a bright field image) and a HAADF image (a high angle annular dark field image) are obtained. From a contrast and a shape obtained with the BF image and the HAADF image, it is possible to obtain a diameter of the Si-containing domain. Diameters of arbitrary selected 10 or more Si-containing domains are obtained, and a mean value of them herein is treated as said "mean particle diameter of the Si-containing domain".

The Si-C composite particles include, for example, a carbon base material and the Si contained at inside of the carbon base material. The carbon base material is preferably, for example, including voids, or is furthermore preferably being a porous carbon base material. The Si contained at the inside of the carbon base material is, for example, to have a size capable of being contained at the inside of the carbon base material, or it is good to have a size capable of being contained in the voids when the carbon base material includes the voids. From a perspective described above, regarding the Si contained at the inside of the carbon base material, it is good to be Si-containing nanoparticles (for example, Si nanoparticles, Si oxide nanoparticles, Si nitride nanoparticles, Si carbide nanoparticles, or the like) whose mean particle diameter (here, a mean particle diameter of the Si-containing domain) is approximately 1 nm to 300nm (preferably, 1 nm to 200 nm, or further preferably 1 nm to 100nm). From a perspective of suppressing the volume change in the Si and consequently relieving the volume changes in the first Si-containing particles 12 and the second Si-containing particles 14, it is preferable that the Si-C composite particles contain particles including the carbon base material having the voids (further preferably, a porous carbon base material) and including the Si arranged at the inside of the voids (for example, the Si-containing nanoparticles). Alternatively, regarding another embodiment, the Si-C composite particles might contain carbon particles and the Si-containing nanoparticles adhered to a surface of the carbon particles, or might contain particles containing the Si and contain the carbon nanoparticles adhered to a surface of the particles containing the Si.

The coating layer 122 and the coating layer 142 herein contain LiFs. Existences of the coating layer 122 and the coating layer 142 can be, for example, confirmed by a measurement with a X-ray photoelectron spectroscopy (XPS) on the first Si-containing particles 12 and the second Si-containing particles 14. A content rate of the LiF in the coating layer 122 (a concentration of the LiF) corresponds, on the XPS spectrum of the first Si-containing particles 12 measured with the XPS, to a ratio of a peak intensity of a F of the LiF with respect to a peak intensity of the F of one being other than the LiF. A content rate of the LiF in the coating layer 142 (the concentration of the LiF) corresponds, on the XPS spectrum of the second Si-containing particles 14 measured with the XPS, to the ratio of the peak intensity of the F of the LiF with respect to the peak intensity of the F of one being other than the LiF. Incidentally, on the XPS spectrum measured with the XPS, the peak of the F of the LiF appears at 683 eV to 686 eV. The peak of the F of one being other than the LiF is the peak of the F outside the range of being 683 eV to 686eV, and especially appears at 687 eV to 690 eV.

Here, on the XPS spectrum of the first Si-containing particles 12 measured with the XPS, the ratio of the peak intensity of the F of the LiF with respect to the peak intensity of the F of one being other than the LiF is defined as a first peak intensity ratio. On the XPS spectrum of the second Si-containing particles 14, the ratio of the peak intensity of the F of the LiF with respect to the peak intensity of the F of one being other than the LiF is defined as a second peak intensity ratio. Here, the second peak intensity ratio is larger than the first peak intensity ratio. The second peak intensity ratio is, for example, 1.1 times to 3 times as much as the first peak intensity ratio, or preferably 1.2 times to 2.5 times as much as the first peak intensity ratio.

The first peak intensity ratio is, for example, equal to or more than 0.200, preferably equal to or more than 0.250, or further preferably equal to or more than 0.300. In contrary, the first peak intensity ratio is, for example, less than 0.450, preferably equal to or less than 0.400, or further preferably equal to or less than 0.380. The second peak intensity ratio is, for example, equal to or more than 0.450, preferably equal to or more than 0.480, or further preferably equal to or more than 0.500. In contrary, the second peak intensity ratio is approximately equal to or less than 1.00, for example, equal to or less than 0.900, preferably equal to or less than 0.850, further preferably equal to or less than 0.800, or furthermore preferably equal to or less than 0.750.

What the core particles 121 include the coating layer 122 and what the core particles 141 includes the coating layer 142 can be confirmed, for example, by an electron microscope observation, too. A covering rate on the surface of the core particles 121 by the coating layer 122 is, for example, equal to or more than 20%, preferably equal to or more than 50%, further preferably equal to or more than 80%, or furthermore preferably equal to or more than 90%, and it is better as it is closer to 100%. A covering rate on the surface of the core particles 141 by the coating layer 142 is, for example, equal to or more than 20%, preferably equal to or more than 50%, further preferably equal to or more than 80%, or furthermore preferably equal to or more than 90%, and it is better as it is closer to 100%. Although not particularly restricting, the covering rate on the surface of the core particles 141 by the coating layer 142 might be, for example, larger than the covering rate on the surface of the core particles 121 by the coating layer 122. Incidentally, the covering rate by the coating layer 122 or by the coating layer 142 can be obtained as described below. A SEM observation image of a cross section of the first Si-containing particles 12 or the second Si-containing particles 14 is obtained. On this image, a rate (percentage) of a total length of the coating layer 122 or the coating layer 142 with respect to a perimeter of the core particles 121 or the core particles 141 is calculated. For arbitrarily selected 5 or more first Si-containing particles 12 or second Si-containing particles 14, these rates are calculated and then a mean value of them is treated as the covering rate.

When an expansion rate S2 of the second Si-containing particles 14 is treated as 1, an expansion rate S1 of the first Si-containing particles 12 is, for example, more than 0.3 and not more than 0.9, and it is, from a perspective of implementing an effect of a herein disclosed technique, preferably 0.4 to 0.8. The expansion rate S1 and the expansion rate S2 herein mean a volume expansion rate for a volume after an electrical charge A with respect to a volume before the electrical charge A. The expansion rate S1 and the expansion rate S2 can be suitably changed, for example, by changing Si content rates of the first Si-containing particles 12 and the second Si-containing particles 14, voids amount of the carbon base material, or the like.

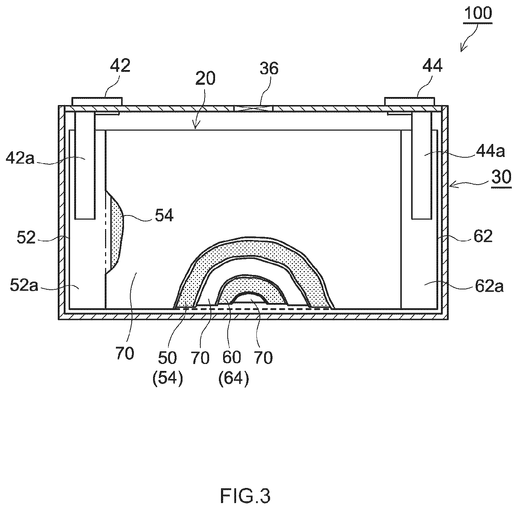

The electrical charge A herein is an electrical charge in which, after a constant current electrical charge is performed under 25°C environment by a current value being 0.01 C till 4.2 V, a constant voltage electrical charge is performed till the current value reaches 0.005 C. The electrical charge A is performed, for example, on a secondary battery for evaluation (for example, the lithium ion secondary battery) that includes the negative electrode containing only the first Si-containing particles or the second Si-containing particles as the negative electrode active material. For the electrical charge A, it is preferable that the secondary battery for evaluation is, for example, in a condition where a SOC (a state of charge) is 0%. Although not particularly restricting, it is preferable that the electrical charge A is performed, for example, before an initial electrical charge is performed on the secondary battery for evaluation. Incidentally, the secondary battery for evaluation described above might include the same configuration as a lithium ion secondary battery 100 (see FIG. 3), other than the configuration in which the negative electrode active material layer contains only the first Si-containing particles or the second Si-containing particles as the negative electrode active material.

The expansion rate S1 can be obtained, for example, as described below. At first, a cross section being along the thickness direction of the negative electrode active material layer containing only the first Si-containing particles as the negative electrode active material is processed for observation with an electron microscope (SEM). The process described above is performed, under a condition with 4 kV voltage and 8 hours processing time, in which a cross section polisher (CP) equipment is used. Next, a SEM observation image of a processing surface is obtained. It is good that an observation magnification at that time is set to be, for example, 1000 times to 4000 times. Next, the secondary battery for evaluation including this negative electrode active material layer is constructed, and then the electrical charge A is performed on this. Next, the secondary battery for evaluation is disassembled and then the negative electrode is taken out. Next, a SEM observation on the processing surface, whose SEM observation image was obtained before the electrical charge A, is performed and thus the SEM observation image after the electrical charge A is obtained. Then, while an image analyzing software (for example, "ImageJ") is used, area sizes P1 of 100 first Si-containing particles selected at random from the SEM observation image before the electrical charge A are measured, and additionally area sizes P2 of the same first Si-containing particles selected from the SEM observation image after the electrical charge A are measured. Then, for each of the particles, the expansion rate is calculated with below described Formula (A):

$$\text{Expansion rate (\%)} = [\sqrt{\{(\text{Area size P2})/(\text{Area size P1})\}}]^3 \times 100 \quad \text{(A)}$$

An arithmetic average value for the herein obtained expansion rates of 100 particles is calculated, and it is treated as the expansion rate S1 of the first Si-containing particle.

The expansion rate S1 is, for example, smaller than the expansion rate S2. The expansion rate S1 is, for example, equal to or more than 100%, or suitably less than 200%. Although not particularly restricting, the expansion rate S1 might be equal to or more than 110%, might be equal to or more than 120%, might be alternatively equal to or less than 190%, or might be equal to or less than 180%.

When the expansion rate S2 is obtained, at first, the cross section being along the thickness direction of the negative electrode active material layer containing only the second Si-containing particles as the negative electrode active material is processed for observation with the SEM. Regarding the expansion rate S2, for example, area sizes Q1 of 100 second Si-containing particles selected at random from the SEM observation image before the electrical charge A are measured, and area sizes Q2 of the same second Si-containing particles of the SEM observation image after the electrical charge A are measured. Then, for each of the particles, the expansion rate is calculated with below described Formula (B):

$$\text{Expansion rate (\%)} = [\sqrt{\{(\text{Area size Q2})/(\text{Area size Q1})\}}]^3 \times 100 \quad \text{(B)}$$

An arithmetic average value for the herein obtained expansion rates of 100 particles is calculated, and then it is treated as the expansion rate S2 of the second Si-containing particle. Incidentally, here, a procedure for obtaining the expansion rate S2 might be the same as the procedure for obtaining the expansion rate S1. Thus, an explanation about the procedure for obtaining the expansion rate S2 is suitably omitted.

The expansion rate S2 is, for example, larger than the expansion rate S1. The expansion rate S2 is, for example, equal to or more than 200%, or suitably equal to or less than 400%. Although not particularly restricting, the expansion rate S2 might be equal to or more than 210%, alternatively might be equal to or less than 380%, might be equal to or less than 360%, or might be equal to or less than 350.

The mean particle diameter (D50) of the first Si-containing particles 12 and the mean particle diameter (D50) of the second Si-containing particles 14 are not particularly restricted, and are, for example, 0.5 µm to 25 µm, preferably 1 µm to 20 µm, or further preferably 2 µm to 15 µm. The mean particle diameter (D50) of the first Si-containing particles 12 and the mean particle diameter (D50) of the second Si-containing particles 14 might be the same or might be different from each other.

A content rate of the Si in the first Si-containing particles 12 and a content rate of the Si in the second Si-containing particles 14 might be the same or might be different from each other. Although not particularly restricting, it is good that the content rate of the Si in the first Si-containing particles 12 and the content rate of the Si in the second Si-containing particles 14 are approximately 20 mass% to 80 mass%.

Mass ratios of the first Si-containing particles 12 and the second Si-containing particles 14 in the negative electrode active material layer 64 might be the same, or might be different from each other. The mass ratio (first Si-containing particles 12 : second Si-containing particles 14) is not particularly restricted insofar as the effect of the herein disclosed technique can be obtained, and is, for example, 5 : 95 to 95 : 5. This mass ratio (first Si-containing particles 12 : second Si-containing particles 14) is preferably 10 : 90 to 90 : 10, or further preferably 15 : 85 to 85 : 15. In a situation where the mass ratios of the first Si-containing particles 12 and the second Si-containing particles 14 in the negative electrode active material layer 64 are different from each other, from a perspective of further preferably implementing the effect of the herein disclosed technique, it is preferable that the mass ratio of the second Si-containing particles 14 is relatively smaller. In this situation, when a sum of the first Si-containing particles 12 and the second Si-containing particles 14 is treated as 100 mass%, a rate of the second Si-containing particles 14 is preferably 5 mass% to 40 mass%, or further preferably 10 mass% to 30 mass%.

Incidentally, the first Si-containing particles 12 and the second Si-containing particles 14 can be manufactured by a well known method. Incidentally, various manufacturing methods of the particle of the Si-C composite material are well known (for example, see Japanese Patent Application Publication No. 2015-38862, International Patent Publication 2014/046144, prior art documents recited in these publications, or the like).

As shown in FIG. 3, the negative electrode active material layer 64 might contain graphite particles 16 as the negative electrode active material, from a perspective of enhancing an electrically conductive property of the negative electrode 60. The graphite particles 16 is, for example, configured to substantially not contain the Si. The content rate of the Si contained in the graphite particles 16 is approximately equal to or less than 10 mass%, for example, equal to or less than 7 mass%, preferably equal to or less than 5 mass%, further preferably equal to or less than 3 mass%, or furthermore preferably equal to or less than 1 mass%, alternatively equal to or less than 0.5 mass%, and thus it is better as closer to 0 mass%. The Si content rate can be calculated, for example, by a conventionally known method, such as ICP analysis.

A graphite configuring the graphite particles 16 might be a natural graphite or an artificial graphite, or might be an amorphous carbon coated graphite having a form in which the graphite is coated with an amorphous carbon material.

A shape of the graphite particles 16 is not particularly restricted, and might be a scaly shape, a spheroidized shape, or the like. The graphite particles 16 are preferably spheroidized graphite particles. In a situation where the graphite particles 16 are spheroidized, a circularity of the graphite particles 16 is preferably 0.85 to 1, further preferably 0.88 to 1, or furthermore preferably 0.90 to 1.

Incidentally, the term "circularity" in the present description represents a ratio of a perimeter of a perfect circle whose area size is the same as a projected area size of a particle with respect to a perimeter of a particle projected image (in other words, the circularity = the perimeter of the perfect circle whose area size is the same as the projected area size of the particle / the perimeter of the particle projected image). Thus, as the circularity is closer to 1, it means that the particle projected image is closer to the perfect circle and the particle becomes closer to a perfect spherical shape. The circularity can be obtained, for example, by using a commercially available static automatic image analysis apparatus, obtaining the circularities of 100 or more particles, and calculating a mean value for them.

A mean particle diameter (D50) of the graphite particles 16 is not particularly restricted. The mean particle diameter (D50) of the graphite particles 16 is, for example, 1 $\mu$m to 30 $\mu$m, preferably 5 $\mu$m to 25 $\mu$m, further preferably 10 $\mu$m to 23 $\mu$m, or furthermore preferably 12 $\mu$m to 20 $\mu$m.

A content rate of the graphite particles 16 with respect to a sum of the first Si-containing particles 12, the second Si-containing particles 14, and the graphite particles 16 is preferably 40 mass% to 90 mass%, further preferably 45 mass% to 85 mass, or furthermore preferably 50 mass% to 80 mass%. A rate of a sum of the first Si-containing particles 12 and the second Si-containing particles 14 with respect to the sum of the first Si-containing particles 12, the second Si-containing particles 14, and the graphite particles 16 is preferably 10 mass% to 60 mass%, further preferably 15 mass% to 55 mass%, or furthermore preferably 20 mass% to 50 mass%.

The negative electrode active material layer 64 might contain a component other than the negative electrode active material, and it is possible as an example of it to use a binder, an electrically conducting material, or the like. As the binder, for example, it is possible to use a styrene butadiene rubber (SBR), carboxymethyl cellulose (CMC), polyacrylic acid (PAA), polyvinylidene fluoride (PVDF), or the like. The CMC functions as a thickening agent, too. As an example of the electrically conducting material, it is possible to use a carbon black, such as acetylene black, a carbon fiber, a carbon nanotube (CNT), or the like. Among them, the CNT is preferable. In a situation where the CNT is used as the electrically conducting material, the negative electrode active material layer 64 might contain a dispersing agent for the CNT.

A content amount of the negative electrode active material in the negative electrode active material layer 64 (in other words, with respect to a total mass of the negative electrode active material layer 64) is preferably equal to or more than 90 mass%, or further preferably equal to or more than 95 mass%. The content amount of the binder in the negative electrode active material layer 64 is preferably equal to or more than 0.1 mass% and not more than 8 mass%, or further preferably equal to or more than 0.5 mass% and not more than 5 mass%. A content amount of the electrically conducting material in the negative electrode active material layer 64 is preferably equal to or more than 0.01 mass% and not more than 3 mass%, or further preferably equal to or more than 0.05 mass% and not more than 1 mass%.

A thickness of the negative electrode active material layer 64 is, which is not particularly restricted, for example, equal to or more than 10 $\mu$m and not more than 400 $\mu$m, or preferably equal to or more than 20 $\mu$m and not more than 300 $\mu$m.

The negative electrode 60 might include a member other than the negative electrode current collector 62 and the negative electrode active material layer 64. For example, on the negative electrode active material layer non-formation part 62a, an insulation layer (not shown in drawings) might be provided that is positioned adjacent to the negative electrode active material layer 64. This insulation layer includes, for example, an inorganic filler having an insulating property, or the like.

As described above, the negative electrode 60 for the secondary battery includes the negative electrode current collector 62 and the negative electrode active material layer 64. The negative electrode active material layer 64 is supported by the negative electrode current collector 62. The negative electrode active material layer 64 contains the first Si-containing particles 12 and the second Si-containing particles 14, as the negative electrode active material. When the expansion rate S2 of the second Si-containing particles 14 after the electrical charge A with respect to one before the electrical charge A is treated as 1, the expansion rate S1 of the first Si-containing particles 12 after the electrical charge A with respect to one before the electrical charge A is more than 0.3 and not more than 0.9. The electrical charge A is an electrical charge in which, after a constant current electrical charge is performed under 25°C environment by a current value being 0.01 C till 4.2 V, a constant voltage electrical charge is performed till the current value reaches 0.005 C.

The first Si-containing particles 12 include a LiF coating layer (here, the LiF coating layer contained in the coating layer 122). The second Si-containing particles 14 include the LiF coating layer (here, the LiF coating layer contained in the coating layer 142). On the XPS spectrum of the first Si-containing particles 12 measured with the XPS, the ratio of the peak intensity of the F of the LiF with respect to the peak intensity of the F of one being other than the LiF is defined as a first peak intensity ratio. On the XPS spectrum of the second Si-containing particles 14, the ratio of the peak intensity of the F of the LiF with respect to the peak intensity of the F of one being other than the LiF is defined as a second peak intensity ratio. At that time, the second peak intensity ratio is larger than the first peak intensity ratio.

In other words, regarding the negative electrode 60, the negative electrode active material layer 64 contains the first Si-containing particles 12 whose expansion rate is relatively smaller, and the second Si-containing particles 14 whose expansion rate is relatively larger. With respect to the expansion rate of the second Si-containing particles 14, the expansion rate of the first Si-containing particles 12 is set to be more than 0.3 and not more than 0.9. By this, it is possible to suppress the reduction in the packing ability of the negative electrode active material of the negative electrode active material layer 64 even when the negative electrode active material is expanded or contracted in response to the electrical charge and discharge, and therefore it is possible to maintain the electrically conductive path in the suitable state. In addition to this, each of the first Si-containing particles 12 and the second Si-containing particles 14 includes the LiF coating layers. The second peak intensity ratio of the second Si-containing particles 14 whose expansion rate is relatively larger is larger than the first peak intensity ratio of the first Si-containing particles 12 whose expansion rate is relatively smaller. In other words, regarding the second Si-containing particles 14 whose expansion rate is larger than the first Si-containing particles 12, a LiF coating layer amount is larger than one regarding the first Si-containing particles 12. By providing the LiF coating layer according to the expansion rate, it is possible, for example, to properly suppress the exposure of the surface caused by the expansion. Thus, in accordance with such a configuration, it is possible to suppress a reduction in a capacity maintenance rate at the time when the electrical charge and the electrical discharge are repeated.

The first peak intensity ratio might be equal to or more than 0.200 and less than 0.450. By this, due to the expansion at the electrically charging time, it is possible to suitably suppress the exposed portion from being caused on the surface of the first Si-containing particle 12.

The second peak intensity ratio might be equal to or more than 0.450 and not more than 1.00. By this, due to the expansion at the electrically charging time, it is possible to suitably suppress the exposed portion from being caused on the surface of the second Si-containing particles 14. Further, it is possible to suppress the resistance of the negative electrode 60 from being increased too much due to the formation of the LiF coating layer.

The first Si-containing particles 12 might contain the Si-C composite particles (here, the core particles 121) including the carbon base material and the Si contained at the inside of the carbon base material, and contain the LiF coating layer (here, the LiF coating layer contained in the coating layer 122) arranged on at least a part of the surface of the Si-C composite particles (here, the core particles 121). The second Si-containing particles 14 might contain the Si-C composite particles (here, the core particles 141) including the carbon base material and the Si contained at the inside of the carbon base material, and contain the LiF coating layer (here, the LiF coating layer contained in the coating layer 142) arranged on at least a part of the surface of this Si-C composite particles (here, the core particles 141). By this, it is possible to relieve the expansion of the Si in the carbon base material, and thus it is possible to suppress the expansions of the first Si-containing particles 12 and the second Si-containing particles 14.

The negative electrode active material layer 64 might further contain the graphite particles, as the negative electrode active material, which substantially does not contain the Si. By this, it is possible to enhance the electrically conductive property of the negative electrode active material layer 64.

The negative electrode 60 is, for example, manufactured by a manufacturing method described below. The manufacturing method of the negative electrode 60 includes, for example, a step for preparing the first Si-containing particles 12 and the second Si-containing particles 14 (below, which is referred to as "preparing step", too); a step for mixing the first Si-containing particles 12, the second Si-containing particles 14, and the graphite particles 16 as needed into a dispersion medium so as to prepare a negative electrode paste (below, which is referred to as "paste preparing step", too); a step for applying this negative electrode paste to coat the negative electrode current collector (below, which is referred to as "coating step", too), and a step for drying this coating negative electrode paste (below, which is referred to as "drying step", too). By performing the manufacturing method described above, it is possible to provide the negative electrode 60 in which the reduction in a capacity maintenance rate at the time when the electrical charge and the electrical discharge are repeated can be suppressed.

Incidentally, in the present description, the term "paste" represents a mixture in which a part or all of solid contents are dispersed into a dispersion medium, and semantically covers so-called "slurry", "ink", or the like.

At the preparing step, the first Si-containing particles 12 including the Si-containing particles as the core particles 121 and including the coating layer 122, and the second Si-containing particles 14 including the Si-containing particles as the core particles 141 and including the coating layer 142 are prepared. The Si-containing particles as the core particle 121 and the Si-containing particles as the core particle 141 are, for example, Si-C composite particles. It is possible to prepare the Si-C composite particles, for example, with a well known method as described above.

Next, while the obtained core particles 121 and core particles 141 are maintained in a state of being dispersed into water or water-soluble organic solvent, a water-soluble lithium salt and a fluorinated agent are made to react with the Si-C composite particles so as to generate the LiF. The LiF generated here becomes the coating layer 122 on the surface of the core particles 121 and becomes the coating layer 142 on the surface of the core particles 141.

As the water-soluble organic solvent, it is possible to use, for example, alcohols, such **as ethanol** (ethyl alcohol), or the like. As the water-soluble lithium salt, it is possible, for example, to use lithium acetate (dihydrate), lithium carbonate, lithium nitrate, lithium chloride, lithium hydroxide, or the like, and it is preferable to use the lithium acetate (dihydrate). As the fluorinated agent, it is possible to use hydrofluoric acid, ammonium fluoride, ammonium hydrogen fluoride, or the like, and it is preferable to use the ammonium fluoride.

In order to perform this operation, for example, at first, a solution of the water-soluble lithium salt, a dispersion liquid in which the core particles 121 or the core particles 141 is dispersed into the water or the water-soluble organic solvent, and a solution of the fluorinated agent are prepared. The solution of the water-soluble lithium salt and the dispersion liquid are mixed so as to manufacture a mixed solution. Under stirring, a solution of the fluorinated agent is added to the mixed solution. By this, the water-soluble lithium salt and the fluorinated agent are reacted so as to generate the LiF. By this, a reaction solution containing the LiF is obtained. In this reaction solution, it is possible to make a surface of the core particles 121 or core particles 141 and the LiF come into contact with each other.

A reaction condition of the water-soluble lithium salt and the fluorinated agent might be similar to a well known synthesis condition of the LiF in which the water-soluble lithium salt and the fluorinated agent are used. For example, this reaction can be performed under a room temperature (in other words, 25°C $\pm$ 10°C) or might be performed under a heating condition. A reaction time might be suitably decided in accordance with concentrations of the water-soluble lithium salt and the fluorinated agent in the reaction solution, desired content rates of the LiFs in the coating layer 122 and the coating layer 142, or the like. As the reaction time is longer, the content rates of the LiFs in the coating layer 122 and the coating layer 142 become higher.

By recovering the core particles 121 or the core particles 141 from the reaction solution under a state where the reaction solution, in which the LiF was generated, is adhered to the surface and then by drying the core particles 121 or the core particles 141 on which the reaction solution, in which the LiF was generated, is adhered, it is possible to make the LiF adhere to the surface of the core particles 121 or the core particles 141, and it is possible to obtain the first Si-containing particles 12 or the second Si-containing particles 14, which include the coating layer 122 or the coating layer 142 containing the LiF. In order to adjust an amount of the LiF, the reaction solution in which the LiF was generated might be diluted with a water, or the like.

The paste preparing step can be performed according to a well known method by using a well known mixing device, stirring device, or the like, and thus by mixing the first Si-containing particles 12, the second Si-containing particles 14, the graphite particles 16 as needed, and an arbitrary component (for example, the binder or the like) into the dispersion medium (for example, water).

The coating step can be performed on the basis of a well known method. For example, by applying the obtained negative electrode paste to coat the negative electrode current collector 62 with a coating device, such as gravure coater, comma coater, slit coater, and die coater, the coating step can be performed.

The drying step can be performed on the basis of a well known method. For example, by removing the dispersion medium with a drying equipment, such as drying furnace, from the negative electrode current collector 62 coated with the negative electrode paste, the negative electrode active material layer 64 is formed. By this, it is possible to perform the drying step. A drying temperature and a drying time can be suitably decided in accordance with a solid content concentration of the negative electrode paste, and thus are not particularly restricted. The drying temperature is, for example, equal to or more than 60°C and not more than 200°C, or preferably equal to or more than 70°C and not more than 150°C. The drying time is, for example, equal to or more than 10 seconds and not more than 30 minutes, or preferably equal to or more than 30 seconds and not more than 10 minutes.

After the drying step, a step for pressing the negative electrode active material layer 64 might be further performed. The pressing step can be performed on the basis of a well known method. For example, by applying a pressure with a roller press, or the like, on the above formed negative electrode active material layer 64, it is possible to perform the pressing step. By performing the pressing step, it is possible to tightly pack the first Si-containing particles 12, the second Si-containing particles 14, and the graphite particles 16 as needed, which are contained in the negative electrode active material layer 64. As described above, it is possible to obtain the negative electrode 60.

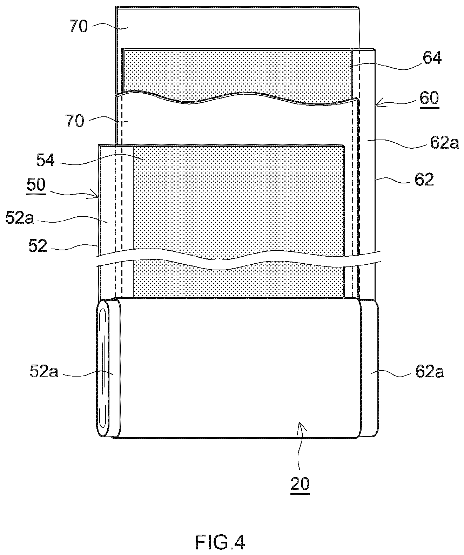

Then, from a different aspect, the herein disclosed secondary battery includes the positive electrode, the negative electrode, and the electrolyte. This negative electrode is the negative electrode 60 in accordance with the above described embodiment. Below, while the lithium ion secondary battery is treated as an example, one embodiment of the herein disclosed secondary battery would be explained as referring to FIG. 3 and FIG. 4. A below described configuration example is a lithium ion secondary battery that is formed in a flat square shape and that includes a wound electrode assembly formed in a flat shape and includes a battery case formed in a flat shape.

The lithium ion secondary battery 100 shown in FIG. 3 is the sealed type lithium ion secondary battery 100 constructed by accommodating the flat-shaped wound electrode assembly 20 and the nonaqueous electrolytic solution (not shown in drawings) in the battery case (in other words, the outer container) 30 having a flat square shape. The battery case 30 is provided with a positive electrode terminal 42 and a negative electrode terminal 44 which are for outside connection, and provided with a thin-walled safe valve 36 which is set to release an internal pressure of the battery case 30 when the internal pressure is increased to be equal to or more than a predetermined level. The battery case 30 is provided with an injection port (not shown in drawings) for injecting the nonaqueous electrolytic solution. The positive electrode terminal 42 is electrically connected to a positive electrode current collection plate 42a. The negative electrode terminal 44 is electrically connected to the negative electrode current collection plate 44a. As a material of the battery case 30, for example, it is possible to use a metal material, such as aluminum, being lightweight and having a good thermal conductivity.

The wound electrode assembly 20 has a form, as shown by FIG. 3 and FIG. 4, in which a positive electrode sheet 50 and a negative electrode sheet 60 are stacked one on another via 2 long separator sheets 70 and then wound in a longitudinal direction. The positive electrode sheet 50 has a configuration in which a positive electrode active material layer 54 is formed on one surface or both surfaces (here, both surfaces) of a long positive electrode current collector 52 along the longitudinal direction. The negative electrode sheet 60 has a configuration in which the negative electrode active material layer 64 is formed on one surface or both surfaces (here, both surfaces) of the long negative electrode current collector 62 along the longitudinal direction. A positive electrode active material layer non-formation part 52a (in other words, a portion where the positive electrode active material layer 54 is not formed and the positive electrode current collector 52 is exposed) and the negative electrode active material layer non-formation part 62a (in other words, a portion where the negative electrode active material layer 64 is not formed and the negative electrode current collector 62 is exposed) are formed to protrude outwardly from both ends of the wound electrode assembly 20 in a winding axis direction (in other words, a sheet width direction orthogonal to the longitudinal direction). To the positive electrode active material layer non-formation part 52a and the negative electrode active material layer non-formation part 62a, the positive electrode current collection plate 42a and the negative electrode current collection plate 44a are respectively joined.

As the positive electrode current collector 52 configuring the positive electrode sheet 50, it is possible to use a well known positive electrode current collector that is used for the lithium ion secondary battery, and it is possible as an example of it to use a sheet or a foil which is made from a metal having the good electrically conductive property (for example, aluminum, nickel, titanium, stainless steel, or the like). As the positive electrode current collector 52, it is preferable to use the aluminum foil.

A size of the positive electrode current collector 52 is not particularly restricted, and can be decided suitably according to the battery design. In a situation where the aluminum foil is used as the positive electrode current collector 52, a thickness of it is not particularly restricted, but is, for example, equal to or more than 5 $\mu$m and not more than 35 $\mu$m, or preferably equal to or more than 7 $\mu$m and not more than 20 $\mu$m.

The positive electrode active material layer 54 contains a positive electrode active material. As the positive electrode active material, it is possible to use a positive electrode active material which is used for the lithium ion secondary battery and whose composition is well known. In particular, for example, it is possible as the positive electrode active material to use a lithium composite oxide, a lithium transition metal phosphate compound, or the like. A crystal structure of the positive electrode active material is not particularly restricted, but might be a layered structure, a spinel structure, an olivine structure, or the like.

Regarding the lithium composite oxide, it is preferable as a transition metal element to use a lithium transition metal complex oxide containing at least 1 kind among Ni, Co, and Mn, and it is possible as a specific example of it to use a lithium nickel base composite oxide, a lithium cobalt base composite oxide, a lithium manganese base composite oxide, a lithium nickel manganese base composite oxide, a lithium nickel cobalt manganese base composite oxide, a lithium nickel cobalt aluminum base composite oxide, a lithium iron nickel manganese base composite oxide, or the like.

Incidentally, the wording "lithium nickel cobalt manganese base composite oxide" in the present description is a term semantically covering not only the oxide whose constituent element is Li, Ni, Co, Mn, or O, but also an oxide containing 1 kind, 2 kinds, or more kinds of additive elements other than them. As an example of the additive element described above, it is possible to use a transition metal element, such as Mg, Ca, Al, Ti, V, Cr, Y, Zr, Nb, Mo, Hf, Ta, W, Na, Fe, Zn, and Sn, a typical metal element, or the like. The additive element might be a semimetal element, such as B, C, Si, and P, or a non-metal element, such as S, F, Cl, Br, and I. This matter is similar even on the above described lithium nickel base composite oxide, lithium cobalt base composite oxide, lithium manganese base composite oxide, lithium nickel manganese base composite oxide, lithium nickel cobalt aluminum base composite oxide, lithium iron nickel manganese base composite oxide, or the like.

As the lithium transition metal phosphate compound, it is possible to use, for example, lithium iron phosphate ($LiFePO_4$), lithium manganese phosphate ($LiMnPO_4$), lithium manganese iron phosphate, or the like.

Regarding these positive electrode active materials, 1 kind might be used alone, or 2 or more kinds might be combined to be used. As the positive electrode active material, the lithium nickel cobalt manganese base composite oxide is especially preferable because it has superior characteristics, such as initial resistance characteristic.

The mean particle diameter (D50) of the positive electrode active material is not particularly restricted, but is, for example, equal to or more than 0.05 $\mu$m and not more than 25 $\mu$m, preferably equal to or more than 1 $\mu$m and not more than 20 $\mu$m, or further preferably equal to or more than 3 $\mu$m and not more than 15 $\mu$m.

The positive electrode active material layer 54 might contain a component other than the positive electrode active material, such as trilithium phosphate, electrically conducting material, and binder. As the electrically conducting material, it is possible to suitably use, for example, a carbon black, such as acetylene black (AB); a carbon fiber, such as vapor grown carbon fiber (VGCF) and carbon nanotube (CNT); or the other carbon material (for example, a graphite, or the like). As the binder, it is possible to use, for example, polyvinylidene fluoride (PVdF), or the like.

A content amount of the positive electrode active material in the positive electrode active material layer 54 (in other words, a content amount of the positive electrode active material with respect to a total mass of the positive electrode active material layer 54) is not particularly restricted, but preferably equal to or more than 70 mass%, further preferably equal to or more than 80 mass%, or furthermore preferably equal to or more than 85 mass% and not more than 99 mass%. The content amount of the trilithium phosphate in the positive electrode active material layer 54 is not particularly restricted, but is preferably equal to or more than 0.1 mass% and not more than 15 mass%, or further preferably equal to or more than 0.2 mass% and not more than 10 mass%. The content amount of the electrically conducting material in the positive electrode active material layer 54 is not particularly restricted, but preferably equal to or more than 0.1 mass% and not more than 20 mass%, or further preferably equal to or more than 0.3 mass% and not more than 15 mass%. A content amount of the binder in the positive electrode active material layer 54 is not particularly restricted, but preferably equal to or more than 0.4 mass% and not more than 15 mass%, or further preferably equal to or more than 0.5 mass% and not more than 10 mass%.

A thickness per one surface of the positive electrode active material layer 54 is not particularly restricted, but is normally equal to or more than 10 $\mu$m, or preferably equal to or more than 20 $\mu$m. On the other hand, this thickness is normally equal to or less than 400 $\mu$m, or preferably equal to or less than 300 $\mu$m.

As the negative electrode sheet 60, the above described negative electrode 60 is used.

As the separator 70, it is possible to use, for example, a porous sheet (film) configured with a resin, such as polyethylene (PE), polypropylene (PP), polyester, cellulose, and polyamide. The porous sheet described above might have a single layer structure, or might have two or more layers laminate structure (for example, a three layers structure in which PP layers are laminated on both surfaces of a PE layer). On a surface of the separator 70, a heat resistance layer (HRL) might be provided.

A thickness of the separator 70 is not particularly restricted, but is, for example, equal to or more than 5 $\mu$m and not more than 50 $\mu$m, or preferably equal to or more than 10 $\mu$m and not more than 30 $\mu$m. An air permeability of the separator 70 obtained by Gurley test is not particularly restricted, but is preferably equal to or less than 350 second/100cc.

The nonaqueous electrolytic solution contains, for example, a nonaqueous solvent and a supporting salt (an electrolyte salt). As the nonaqueous solvent, it is possible without particular restriction to use an organic solvent, such as carbonates, ethers, esters, nitriles, sulfones, and lactones, which can be used for the electrolytic solution of a general lithium ion secondary battery. Among them, the carbonates are preferable, and it is possible as a specific example of them to use ethylene carbonate (EC), propylene carbonate (PC), diethyl carbonate (DEC), dimethyl carbonate (DMC), ethyl methyl carbonate (EMC), monofluoroethylene carbonate (FEC), difluoroethylene carbonate (DFEC), monofluoromethyl difluoromethyl carbonate (F-DMC), trifluoro dimethyl carbonate (TFDMC), or the like. Regarding the nonaqueous solvents as described above, it is possible to use 1 kind alone or to combine 2 or more kinds so as to use the resultant. As one example, the nonaqueous solvent consists of only the carbonates. As another example, the nonaqueous solvent contains the carbonates and the esters, such as methyl acetate.

As the supporting salt, it is possible to suitably use, for example, a lithium salt, such as $LiPF_6$, $LiBF_4$, and lithium bis(fluorosulfonyl)imide (LiFSI)(preferably, the $LiPF_6$). A concentration of the supporting salt is preferably equal to or more than 0.7 mol/L and not more than 1.3 mol/L.

Incidentally, the above described nonaqueous electrolytic solution might contain a component other than the above described components, insofar as the effect of the present disclosure is not significantly spoiled, and thus might contain, for example, various additive agents which is a coating layer forming agent, such as vinylene carbonate (VC) and oxalate complex; a gas generating agent, such as biphenyl (BP) and cyclohexylbenzene (CHB); a thickening agent; or the like.

The lithium ion secondary battery 100 can be used for various purposes. As a suitable usage, it is possible to apply it for a driving power supply mounted on a vehicle, such as battery electric vehicle (BEV), hybrid electric vehicle (HEV), and plug-in hybrid electric vehicle (PHEV). The lithium ion secondary battery 100 can be used as a storage battery, such as small electric power storage device. The lithium ion secondary battery 100 can be used, for example, in a form of a battery pack in which plural ones are connected in series and/or in parallel.

Above, as one example, the square-shaped lithium ion secondary battery 100 including the flat-shaped wound electrode assembly 20 has been explained. However, the lithium ion secondary battery can be configured to be a lithium ion secondary battery including a laminate type electrode assembly (in other words, an electrode assembly in which plural positive electrodes and plural negative electrodes are alternately laminated), too. The lithium ion secondary battery can be configured to be a cylindrical-shaped lithium ion secondary battery, a laminate case type lithium ion secondary battery, or the like.

According to a well known method, the lithium ion secondary battery 100 can be configured to be an all-solid state lithium ion secondary battery in which a solid electrolyte is used instead of the nonaqueous electrolyte.

The negative electrode 60 in accordance with the present embodiment is suitable for the negative electrode of the lithium ion secondary battery, but can be constructed for the negative electrode of the other secondary battery so as to be used, and the other secondary battery can be configured according to a well known method.

Below, a practical example relating to the present disclosure would be described in detail, which is not intended to restrict the present disclosure into this practical example.

<Manufacture of Si-C composite particles with coating layer containing LiF>

The Si-C composite particles being as the core particles was prepared. The Si-C composite particles prepared herein were particles that include a porous carbon base material and Si nanoparticles arranged at an inside of a void of this carbon base material. While the Si-C composite particles were subjected to an ultrasonic processing for 30 minutes, it was dispersed into the ethyl alcohol. The lithium acetate was dissolved into deionized water, so that the lithium acetate solution was prepared. Into this solution, the dispersion liquid of the Si-C composite particles was added while being stirred for 30 minutes. Into it, an ammonium fluoride solution was added while being stirred for a predetermined time, so that the lithium acetate and the ammonium fluoride were made to react. By this, the reaction solution containing the LiF was obtained. The reaction solution was diluted, and then it was filtrated. A filtration residue was dried, so that the Si-C composite particles, which include the coating layer containing the LiF, was obtained.

As the XPS spectrum with respect to the obtained Si-C composite particles were measured, a peak of the F of the Li-F (about 684.8 eV) and a peak of the Li of the Li-F (about 55.1 eV) were observed, and thus it was confirmed that the LiF was contained. A ratio of the peak intensity of the F of the LiF with respect to the peak intensity of the F of one being other than the LiF (below, which is referred to as "LiF intensity ratio", too) was obtained. Incidentally, the peak of the F of the LiF appeared at 683 eV to 686 eV, and a peak of the F of one being other than the LiF appeared at 687 eV to 690 eV.

By the procedure described above, Si-containing particles (A) to (J) were obtained. The Si-containing particles (A) were particles whose expansion rate was 153% and whose LiF intensity ratio was 0.362. The Si-containing particles (B) were particles whose expansion rate was 258% and whose LiF intensity ratio was 0.629. The Si-containing particles (C) were particles whose expansion rate was 126% and whose LiF intensity ratio was 0.308. The Si-containing particles (D) were particles whose expansion rate was 339% and whose LiF intensity ratio was 0.729. The Si-containing particles (E) were particles whose expansion rate was 173% and whose LiF intensity ratio was 0.373. The Si-containing particles (F) were particles whose expansion rate was 228% and whose LiF intensity ratio was 0.514. The Si-containing particles (G) were a particle whose expansion rate was 121% and whose LiF intensity ratio was 0.301. The Si-containing particles (H) were particles whose expansion rate was 416% and whose LiF intensity ratio was 1.280. The Si-containing particles (I) were particles whose expansion rate was 183% and whose LiF intensity ratio was 0.382. The Si-containing particles (J) were particles whose expansion rate was 187% and whose LiF intensity ratio was 0.502. Incidentally, by suitably changing an adding time of the ammonium fluoride solution (in other words, the reaction time), the LiF intensity ratios of respective Si-containing particles were made to be different from each other. Incidentally, Table 1 shows presence or absence of the LiF coating layer in each example and shows the LiF intensity ratio of the Si-containing particles.

In addition, Si-containing particles (X) and Si-containing particles (Y), being Si-C composite particles in which the LiF coating layer was not provided, were prepared. The Si-containing particles (X) were particles whose expansion rate was 153%. The Si-containing particles (Y) were particles whose expansion rate was 258%.

<Measurement of expansion rate>

The expansion rate of the Si-containing particles was obtained by a procedure described below. The negative electrode having the same configuration as the present example, other than using only each of the Si-containing particles as the negative electrode active material, was manufactured with the procedure the same as the present example. A cross section along the thickness direction of this negative electrode was processed to be for the SEM observation, and then the SEM observation image of its processing surface was obtained. The observation magnification at that time was 1,500 times. Next, a battery for measurement being the lithium ion secondary battery having the same configuration as the present example, other than using this negative electrode, was manufactured with the procedure the same as the present example. The battery for measurement was kept under 25°C environment, was subjected to the constant current electrical charge by the current value being 0.01 C till 4.2 V, and then was subjected to the constant voltage electrical charge till the current value reached 0.005 C, as the electrical charge. After that, the battery for measurement was disassembled, and the negative electrode was taken out. After that, the SEM observation was performed on the processing surface from which the SEM observation image was obtained before the electrical charge, and then the SEM observation image after the electrical charge was obtained. Then, the image analyzing software "ImageJ" was used, 100 first particles were selected at random from the SEM observation image before the electrical charge, and an area size A1 of the selected particle was measured. Next, regarding the SEM observation image after the electrical charge, an area size A2 of the same first particle was measured. Next, for each of the particles, the expansion rate was calculated with a following Formula (R):

$$\text{Expansion rate (\%)} = [\sqrt{\{(\text{Area size A2})/(\text{Area size A1})\}}]^3 \text{ x } 100 \quad (R)$$

An arithmetic average value for the herein obtained expansion rates of 100 particles was calculated, and then treated as the expansion rate of the Si-containing particle.

<Manufacture of negative electrode>

[Practical example 1]

Regarding the negative electrode active material, the above described Si-containing particles (A) being as the first particles, the Si-containing particles (B) being as the second particles, and the graphite particles whose mean particle diameter (D50) was 15 μm were prepared. The graphite particles described above were the graphite particles that substantially did not contain the Si. The dispersion liquid of the single-walled carbon nanotube (SWCNT) being as the electrically conducting material was prepared. As the binder, the carboxymethyl cellulose (CMC), the polyacrylic acid (PAA), and the styrene butadiene rubber (SBR) were prepared.

The above described materials were kneaded with a water as a solvent to have a weight ratio satisfying graphite particle / first particle / second particle / SWCNT / CMC / PAA / SBR = 65 / 28 / 7 / 0.1 / 1 / 1 / 1.5, and thus the negative electrode paste was manufactured.

The negative electrode paste was manufactured by performing a first step and a second step which are described below. At the first step, firstly, the first particles, the second particles, a paste-formed SWCNT (a solid content rate was 2%), and the dispersion medium were put into a kneading device, and subjected to a dispersion mixing at 3000 rpm with a disper, so that the first paste was manufactured. At the second step, a stirring granulator was used and thus the graphite particles, the CMC, and the PAA were subjected to a dry mixing. The first paste, a powder mix obtained by the dry mixing, and the dispersion medium (the water) were subjected to a thick kneading. The solid content rate at the thick kneading time was 65%. Into the mixture on which the thick kneading was performed, the SBR and the dispersion medium (the water) were further added and then mixed. As described above, the negative electrode paste was manufactured.

The manufactured negative electrode paste was applied to coat a surface of the copper foil whose thickness was 10 μm, and was dried, so that the negative electrode active material layer was formed. After the negative electrode active material layer was subjected to a rolling press, the obtained sheet was processed to have a predetermined size, so that the negative electrode sheet of the present example was obtained.

[Practical example 2]

As the first particles, the Si-containing particles (C) were used. As the second particle, the Si-containing particles (D) were used. Regarding the other matters, the same material and the same procedure as the practical example 1 were used, so that the negative electrode sheet of the present example was obtained.

[Practical example 3]

As the first particles, the Si-containing particles (E) were used. As the second particles, the Si-containing particles (F) were used. Regarding the other matters, the same material and the same procedure as the practical example 1 were used, so that the negative electrode sheet of the present example was obtained.

[Comparative example 1]

As the first particles, the Si-containing particles (X) were used. As the second particles, the Si-containing particles (Y) were used. Regarding the other matters, the same material and the same procedure as the practical example 1 were used, so that the negative electrode sheet of the present example was obtained.

[Comparative example 2]

As the first particles, the Si-containing particles (G) was used. As the second particles, the Si-containing particles (H) were used. Regarding the other matters, the same material and the same procedure as the practical example 1 were used, so that the negative electrode sheet of the present example was obtained.

[Comparative example 3]

As the first particles, the Si-containing particles (I) were used. As the second particles, the Si-containing particles (J) was used. Regarding the other matters, the same material and the same procedure as the practical example 1 were used, so that the negative electrode sheet of the present example was obtained.

<Manufacture of lithium ion secondary battery for evaluation>

$LiNi_{1/3}Co_{1/3}Mn_{1/3}O_2$ (NCM) as the positive electrode active material powder, acetylene black (AB) as the electrically conducting material, and polyvinylidene fluoride (PVdF) as the binder were mixed at a mass ratio being NCM : AB : PVdF = 100 : 1 : 1 with N-methylpyrrolidone (NMP), so that the positive electrode paste was prepared. This paste was applied to coat a surface of the aluminum foil whose thickness was 15 $\mu$m and was dried, so that the positive electrode active material layer was formed. After the positive electrode active material layer was subjected to the rolling press, the obtained sheet was processed to have a predetermined size, so that the positive electrode sheet was obtained.

A separator made from a porous polyolefin was prepared. To each of the above manufactured negative electrode sheet and positive electrode sheet, a lead was attached, and then the resultants were laminated via the separator, so that the electrode assembly was manufactured. This was accommodated together with the nonaqueous electrolytic solution in a case configured with an aluminum laminate film. As the nonaqueous electrolytic solution, a solution was used in which the $LiPF_6$ was dissolved as the supporting salt at a concentration being 1.0 mol/L into a mixed solvent containing the ethylene carbonate (EC), the fluoro ethylene carbonate (FEC), the ethyl methyl carbonate (EMC), and the dimethyl carbonate (DMC) at a volume ratio being 15 : 5 : 40 : 40. After that, the case was sealed, so that the lithium ion secondary battery for evaluation was obtained.

<Cycle characteristic evaluation>

The above manufactured lithium ion secondary battery for evaluation was kept under 25°C environment. Each lithium ion secondary battery for evaluation was subjected to the constant current electrical charge by the current value being 0.4 C till 4.2 V, and then subjected to the constant voltage electrical charge till the current value reached 0.1 C. Next, each lithium ion secondary battery for evaluation was subjected to the constant current electrical discharge by the current value being 0.4 C till 2.5 V. Then, the electrical discharge capacity at that time was measured, so that the initial capacity was obtained.

The electrical charge and discharge, in which the above described electrical charge and discharge was treated as 1 cycle, was repeated to satisfy 200 cycles. The electrical discharge capacity after the 200 cycles was obtained by a method similar to the initial capacity. As an indicator of the cycle characteristic, the capacity maintenance rate (%) was obtained by (Electrical discharge capacity after 200 cycles of electrical charge and discharge / Initial capacity) x 100. The initial capacity was the electrical discharge capacity of the above described electrical charge and discharge at the first cycle. Incidentally, it was better as the capacity maintenance rate was closer to 100%, and it was evaluated regarding the situation in which the capacity maintenance rate was equal to or more than 80% that the reduction in the capacity maintenance rate after the electrical charge and discharge cycle was suppressed.

[Table 1]

Table 1

| | First particles | | Second particles | | Expansion rate ratio* | Capacity maintenance rate [%] |
|---|---|---|---|---|---|---|
| | LiF coating layer | LiF intensity | LiF coating layer | LiF intensity | | |
| Practical example 1 | Presence | 0.362 | Presence | 0.629 | 0.6 | 91 |
| Practical example 2 | Presence | 0.308 | Presence | 0.729 | 0.4 | 87 |
| Practical example 3 | Presence | 0.373 | Presence | 0.514 | 0.8 | 88 |
| Comparative example 1 | Absence | - | Absence | - | 0.6 | 79 |
| Comparative example 2 | Presence | 0.301 | Presence | 1.28 | 0.3 | 75 |

(continued)

| | First particles | | Second particles | | Expansion rate ratio* | Capacity maintenance rate [%] |
|---|---|---|---|---|---|---|
| | LiF coating layer | LiF intensity | LiF coating layer | LiF intensity | | |
| Comparative example 3 | Presence | 0.382 | Presence | 0.502 | 1 | 77 |
| *Expansion rate ratio<br>= Expansion rate of first particles / Expansion rate of second particles | | | | | | |

As shown by Table 1, in Practical examples 1 to 3, the reduction of the capacity maintenance rate at the time when the electric charge and the electric discharge were repeated was suppressed. In Practical examples 1 to 3, as described above, the expansion rate of the first particle after the electrical charge A with respect to one before the electrical charge A was more than 0.3 and not more than 0.9 when the expansion rate of the second particle after the electrical charge A with respect to one before the electrical charge A was treated as 1. The first particle and the second particle included the LiF coating layers. The ratio of the peak intensity of the F of the LiF with respect to the peak intensity of the F of one being other than the LiF on the XPS spectrum of the second particle was larger than the ratio of the peak intensity of the F of the LiF with respect to the peak intensity of the F of one being other than the LiF on the XPS spectrum of the first particle.

Above, specific examples of the present disclosure have been explained in detail, but these are merely illustrative, and are not construed as limiting the scope of the appended claims. The technique recited in claims contains matters in which the above-illustrated specific example is variously deformed or changed.

In short, the negative electrode of the secondary battery of the present disclosure, the manufacturing method of it, and the secondary battery are represented by Items [1] to [8].

[1] A negative electrode of a secondary battery, comprising:

a negative electrode current collector; and
a negative electrode active material layer that is supported by the negative electrode current collector, wherein the negative electrode active material layer comprises a first Si-containing particle and a second Si-containing particle, as negative electrode active materials,
an expansion rate S1 of the first Si-containing particle after an electrical charge A with respect to before the electrical charge A, in which a constant current electrical charge is performed under 25°C environment by a current value being 0.01 C till 4.2 V and then a constant voltage electrical charge is performed till the current value reaches 0.005 C, is more than 0.3 and not more than 0.9 when an expansion rate S2 of the second Si-containing particle after the electrical charge A with respect to before the electrical charge A is treated as 1,
each of the first Si-containing particle and the second Si-containing particle comprises a LiF coating layer, and when a ratio of a peak intensity of a F of a LiF with respect to a peak intensity of the F of one being other than the LiF on a XPS spectrum of the first Si-containing particle measured by a X-ray photoelectron spectroscopy is treated as a first peak intensity ratio and the ratio of the peak intensity of the F of the LiF with respect to the peak intensity of the F of one being other than the LiF on a XPS spectrum of the second Si-containing particle is treated as a second peak intensity ratio, the second peak intensity ratio is larger than the first peak intensity ratio.

[2] The negative electrode recited in [1], wherein
the first peak intensity ratio is equal to or more than 0.200 and less than 0.450.
[3] The negative electrode recited in [1] or [2], wherein
the second peak intensity ratio is equal to or more than 0.450 and not more than 1.00.
[4] The negative electrode recited in any one of [1] to [3], wherein
the first Si-containing particle and the second Si-containing particle comprise a Si-C composite particle comprising a carbon base material and a Si contained at an inside of the carbon base material and comprise the LiF coating layer arranged on at least a part of a surface of the Si-C composite particle.
[5] The negative electrode recited in any one of [1] to [4], wherein
the negative electrode active material layer further comprises a graphite particle, as a negative electrode active material, which substantially does not comprise the Si.
[6] A manufacturing method of a negative electrode of a secondary battery, comprising:

a step for preparing a first Si-containing particle and a second Si-containing particle, as a negative electrode active material;
a step for mixing the first Si-containing particle and the second Si-containing particle in a dispersion medium and for preparing a negative electrode paste;

a step for applying the negative electrode paste to coat the negative electrode current collector; and

a step for drying the coating negative electrode paste, wherein

an expansion rate $S1$ of the first Si-containing particle after an electrical charge A with respect to before the electrical charge A, in which a constant current electrical charge is performed under 25°C environment by a current value being 0.01 C till 4.2 V and then a constant voltage electrical charge is performed till the current value reaches 0.005 C, is more than 0.3 and not more than 0.9 when an expansion rate $S2$ of the second Si-containing particle after the electrical charge A with respect to before the electrical charge A is treated as 1,

each of the first Si-containing particle and the second Si-containing particle comprises a LiF coating layer, and

when a ratio of a peak intensity of a F of a LiF with respect to a peak intensity of the F of one being other than the LiF on a XPS spectrum of the first Si-containing particle measured by a X-ray photoelectron spectroscopy is treated as a first peak intensity ratio and the ratio of the peak intensity of the F of the LiF with respect to the peak intensity of the F of one being other than the LiF on a XPS spectrum of the second Si-containing particle is treated as a second peak intensity ratio, the second peak intensity ratio is larger than the first peak intensity ratio.

[7] The manufacturing method recited in [6], wherein

at the step for preparing, a Si-C composite particle, comprising a carbon base material and comprising a Si comprised at an inside of the carbon base material, is prepared, and

by making the Si-C composite particle react with a water-soluble lithium salt and a fluorinated agent in a state where the Si-C composite particle is dispersed into water or a water-soluble organic solvent so as to generate the LiF, the first Si-containing particle and the second Si-containing particle are prepared.

[8] A secondary battery, comprising:

a positive electrode;

a negative electrode; and

an electrolyte,

wherein the negative electrode is the negative electrode recited in Item [1].

**Claims**

1. A negative electrode (60) of a secondary battery (100), comprising:

a negative electrode current collector (62); and

a negative electrode active material layer (64) that is supported by the negative electrode current collector (62), wherein

the negative electrode active material layer (64) comprises first Si-containing particles (12) and second Si-containing particles (14), as negative electrode active materials,

an expansion rate $S1$ of the first Si-containing particles (12) after an electrical charge A with respect to before the electrical charge A, in which a constant current electrical charge is performed under 25°C environment by a current value being 0.01 C till 4.2 V and then a constant voltage electrical charge is performed till the current value reaches 0.005 C, is more than 0.3 and not more than 0.9 when an expansion rate $S2$ of the second Si-containing particles (14) after the electrical charge A with respect to before the electrical charge A is treated as 1,

each of the first Si-containing particles (12) and the second Si-containing particles (14) comprises a LiF coating layer, and

when a ratio of a peak intensity of a F of a LiF with respect to a peak intensity of the F of one being other than the LiF on a XPS spectrum of the first Si-containing particles (12) measured by a X-ray photoelectron spectroscopy is treated as a first peak intensity ratio and the ratio of the peak intensity of the F of the LiF with respect to the peak intensity of the F of one being other than the LiF on a XPS spectrum of the second Si-containing particles (14) is treated as a second peak intensity ratio, the second peak intensity ratio is larger than the first peak intensity ratio.

2. The negative electrode (60) according to claim 1, wherein

the first peak intensity ratio is equal to or more than 0.200 and less than 0.450.

3. The negative electrode (60) according to claim 2, wherein

the second peak intensity ratio is equal to or more than 0.450 and not more than 1.00.

4. The negative electrode (60) according to any one of claims 1 to 3, wherein
the first Si-containing particles (12) and the second Si-containing particles (14) comprise Si-C composite particles comprising a carbon base material and Si contained at an inside of the carbon base material and comprise the LiF coating layer arranged on at least a part of a surface of the Si-C composite particles.

5. The negative electrode (60) according to any one of claims 1 to 3, wherein
the negative electrode active material layer (64) further comprises graphite particles (16), as a negative electrode active material, which substantially do not comprise Si.

6. A manufacturing method of a negative electrode (60) of a secondary battery (100), comprising:

a step for preparing first Si-containing particles (12) and second Si-containing particles (14), as a negative electrode active material;
a step for mixing the first Si-containing particles (12) and the second Si-containing particles (14) in a dispersion medium and for preparing a negative electrode paste;
a step for applying the negative electrode paste to coat the negative electrode current collector (62); and
a step for drying the coating negative electrode paste, wherein
an expansion rate S1 of the first Si-containing particles (12) after an electrical charge A with respect to before the electrical charge A, in which a constant current electrical charge is performed under 25°C environment by a current value being 0.01 C till 4.2 V and then a constant voltage electrical charge is performed till the current value reaches 0.005 C, is more than 0.3 and not more than 0.9 when an expansion rate S2 of the second Si-containing particles (14) after the electrical charge A with respect to before the electrical charge A is treated as 1,
each of the first Si-containing particles (12) and the second Si-containing particles (14) comprises a LiF coating layer, and
when a ratio of a peak intensity of a F of a LiF with respect to a peak intensity of the F of one being other than the LiF on a XPS spectrum of the first Si-containing particles (12) measured by a X-ray photoelectron spectroscopy is treated as a first peak intensity ratio and the ratio of the peak intensity of the F of the LiF with respect to the peak intensity of the F of one being other than the LiF on a XPS spectrum of the second Si-containing particles (14) is treated as a second peak intensity ratio, the second peak intensity ratio is larger than the first peak intensity ratio.

7. The manufacturing method according to claim 6, wherein

at the step for preparing, Si-C composite particles, comprising a carbon base material and comprising Si comprised at an inside of the carbon base material, is prepared, and
by making the Si-C composite particles react with a water-soluble lithium salt and a fluorinated agent in a state where the Si-C composite particles are dispersed into water or a water-soluble organic solvent so as to generate the LiF, the first Si-containing particles (12) and the second Si-containing particles (14) are prepared.

8. A secondary battery (100), comprising:

a positive electrode (50);
a negative electrode (60); and
an electrolyte,
wherein the negative electrode (60) is the negative electrode (60) according to claim 1.

FIG.1

FIG.2

FIG.3

FIG.4

**EUROPEAN SEARCH REPORT**

Application Number

EP 25 20 1356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 106 207 177 B (TIANJIN EMINENT BATTERY MAT CO LTD) 25 January 2019 (2019-01-25) * claim 1 * ----- | 1-5,8 | INV. H01M4/133 |
| X | YANG YONG ET AL: "Effects of lithium fluoride coating on the performance of nano-silicon as anode material for lithium-ion batteries", MATERIALS LETTERS, vol. 184, 3 August 2016 (2016-08-03), pages 65-68, XP029760714, ISSN: 0167-577X, DOI: 10.1016/J.MATLET.2016.08.006 [retrieved on 2016-08-03] * abstract * ----- | 1-3,8 | |

TECHNICAL FIELDS
SEARCHED (IPC)

H01M

The present search report has been drawn up for all claims

| Place of search | Date of completion of the search | Examiner |
|---|---|---|
| Munich | 22 January 2026 | Radeck, Stephanie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................
& : member of the same patent family, corresponding
    document

EPO FORM 1503 03.82 (P4C01)

## ANNEX TO THE EUROPEAN SEARCH REPORT
## ON EUROPEAN PATENT APPLICATION NO.

EP 25 20 1356

This annex lists the patent family members relating to the patent documents cited in the above-mentioned European search report.
The members are as contained in the European Patent Office EDP file on
The European Patent Office is in no way liable for these particulars which are merely given for the purpose of information.

22-01-2026

| Patent document cited in search report | Publication date | Patent family member(s) | Publication date |
|---|---|---|---|
| CN 106207177 B | 25-01-2019 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019522886 A
- JP 2015038862 A
- JP 2014046144 A